# EUROPEAN PATENT APPLICATION

(11) **EP 2 432 209 A1**
(43) Date of publication of application: **21.03.2012**
(21) Application number: 11181218.6
(22) Date of filing: 14.09.2011
(51) Int. Cl.: H04N 1/21, H04N 1/00, H04N 1/32

(54) **Apparatus and method for managing image data and metadata**

(30) Priority: 15.09.2010 KR 20100090350
(71) Applicant: Samsung Electronics Co., Ltd., Suwon-si, Gyeonggi-do 442-742 (KR)
(72) Inventor: Park, Sang-Min, 442-742 Gyeonggi-do (KR)
(74) Representative: Jenkins, Richard Gavin

(57) **Abstract**

An apparatus and method for managing image data, in which additional information about an image can be input by using an augment reality in a portable terminal. The apparatus preferably includes a camera module for capturing an image, and a display unit for displaying the image and additional information about the image. A controller extracts contexts from the image, displaying the contexts classified per item with related data, storing the displayed contexts, combining related data of the displayed and stored contexts, and displaying and storing the combination as the additional information about the image.

## Description

### BACKGROUND OF THE INVENTION

### 1. Field of the Invention

The present invention generally relates to an apparatus and method for managing image data. More particularly, although not exclusively, the present invention relates to an apparatus and method for managing image data in a portable terminal, in which additional information about an image can be input by using an augment reality.

### 2. Description of the Related Art

With the development of smart phones, a large number of applications using augment reality have been developed. At present, development of augment reality techniques have mainly focused on a function of providing additional information about a currently captured image in view of cameras.

When being located in a new or unknown place, or a place that the user wants to be memorized, the user of a portable terminal takes a picture with a camera provided in the portable terminal, thus using the picture as a type of storage medium.

Recently, Global Positioning System (GPS) information as well as photographing with time information is provided through metadata regarding the taken picture, and information about a photographing place is provided on a site such as Google earth based on the GPS information.

However, the metadata regarding the taken picture merely stores outward characteristics of the picture and is not organically combined with the picture in terms of substantial information.

For example, the position information of a place where the photo was taken, which is stored in the metadata, is GPS information of the location of the photograph, such as 213, 222, 222, rather than information better understood by a human about a detailed location of the place, such as "in front of the Eiffel Tower" or "in front of the McDonald's". As a result, a user's intention is clearly not stored with mere GPS values.

Moreover, in uploading to a blog, simple, but inconvenient manual information input is required, and an input scheme of having to make a selection from a list one by one is relatively cumbersome.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

Accordingly, an exemplary aspect of the present invention is to provide an apparatus and method for managing image data, which permits the input of additional information about an image by using augment reality in a portable terminal.

Another exemplary aspect of the present invention is to provide an apparatus and method for managing image data, which permits storing, uploading, and sharing an image including additional information in various file formats in a portable terminal.

According to another exemplary aspect of the present invention, there is provided an apparatus for managing image data. The apparatus preferably includes a camera module for capturing an image, a display unit for displaying the image and additional information about the image, and a controller for extracting contexts from the image, displaying the contexts classified per item with related data, storing the displayed contexts, combining related data of the displayed and stored contexts, and for displaying and storing the combination as the additional information about the image.

According to still another exemplary aspect of the present invention, there is provided a method for managing image data. The method preferably includes, upon selection of input of additional information about an image, extracting contexts from the image and classifying the contexts per item, and displaying and storing related data of the contexts classified per item and displaying and storing the additional information about the image by combining the related data of the contexts classified per item.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other features and advantages of aspects and embodiments of the present invention will become apparent to a person of ordinary skill in the art from the following detailed description taken in conjunction with the accompanying drawings, in which:
FIG. 1 is a block diagram of a portable terminal according to an exemplary embodiment of the present invention;
FIGs. 2A through 2C are flowcharts illustrating exemplary operation of inputting additional information about an image in a portable terminal according to an exemplary embodiment of the present invention; and
FIGs. 3 through 7 are diagrams illustrating a process of inputting additional information about an image in a portable terminal according to an exemplary embodiment of the present invention.

### DETAILED DESCRIPTION

Hereinafter, an exemplary embodiment of the present invention will be described in detail with reference to the accompanying drawings. Throughout the drawings, like components will be indicated by like reference numerals.

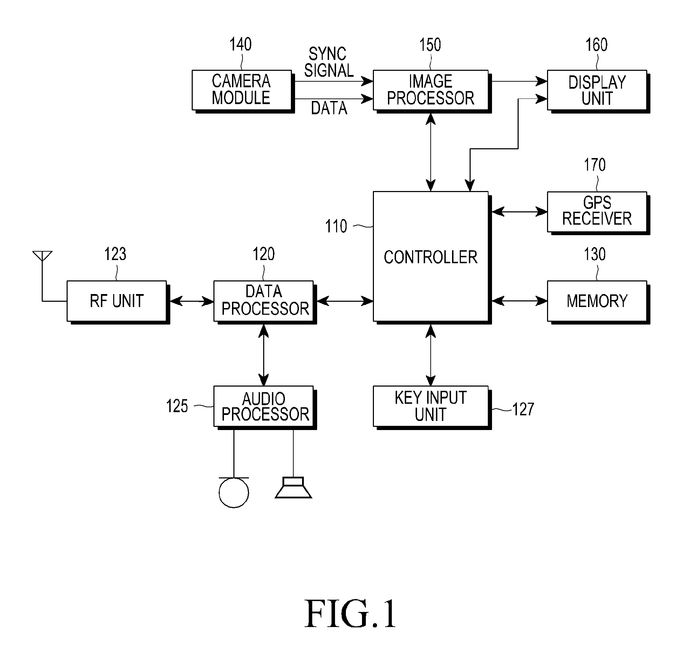

FIG. 1 is a block diagram of a portable terminal according to an exemplary embodiment of the present invention.

Referring now to FIG. 1, a Radio Frequency (RF) unit 123 performs a wireless communication function of the portable terminal. The RF unit 123 includes a transceiver or an RF transmitter for up-converting a frequency of a transmission signal and amplifying the transmitted signal and an RF receiver for low-noise amplifying a received signal and down-converting the frequency of the received signal. A data processor 120 includes a transmitter for encoding and modulating the transmission signal and a receiver for demodulating and decoding the received signal. In other words, the data processor 120 may include a modem and a codec and processing means for encoding and decoding, such as a microprocessor. Herein, the codec preferably includes a data codec for processing packet data and an audio codec for processing an audio signal such as voice. An audio processor 125 reproduces an audio signal being output from the audio codec of the data processor 120 or transmits an audio signal generated from a microphone to the audio codec of the data processor 120.

A key input unit 127 includes keys for inputting numeric and character information and function keys for setting various functions. It is within the spirit and scope of the claimed invention that the keys may comprise virtual keys on a touch screen, which could be used in addition to the display, or encompassed by the display.

A memory 130 includes program and data memories stored in a non-transitory machine readable medium. The program memory stores programs for controlling a general operation of the portable terminal and programs for controlling input of additional information about an image by using augment reality according to an exemplary embodiment of the present invention.

The program memory may also store programs for displaying a single sentence by combining related data of contexts classified according to per-item classification information for input of additional information about an image according to an embodiment of the present invention. The data memory also temporarily stores data generated during execution of the programs.

The memory 130 includes a database that stores related data of a context for each item according to an exemplary embodiment of the present invention, in which the related data may be stored in the format of an Extensible Markup Language (XML) or a Hypertext Markup Language (HTML).

The memory 130 stores data displayed by the display unit as the additional information through the image or separately from the image according to an embodiment of the present invention. The additional information may be stored as a single image file (JPG) through the image, and the image including the additional information may be stored in another file format other than the image file, or the additional information may be stored in the XML or HTML format separately from the image.

A controller 110 controls overall operation of the portable terminal typically in the form of microprocessor .

The controller 110 extracts contexts from the image, classifies the extracted contexts according to per-item classification information, extracts related data of the contexts from an address book, a calendar, and a schedule stored in a web server or a portable terminal, and maps the related data to the contexts, according to an embodiment of the present invention.

The per-item classification information includes a place (where) item, a time (when) item, a target (who) item, and an object (what) item.

Once the "place" item is selected in an additional information input area including the per-item classification information to display and store a context classified per item according to an embodiment of the present invention, the controller 110 displays and stores related data of a place context selected from a number of place contexts displayed on the image.

If the "time" item is selected in the additional information input area according to an exemplary embodiment of the present invention, the controller 110 searches for a calendar including a current date and schedule data corresponding to the current date in a calendar and a schedule of the portable terminal, displays the found calendar and schedule data, and displays and stores a schedule item selected from the displayed schedule data.

If the "target" item is selected in the additional information input area according to an exemplary embodiment of the present invention, the controller 110 searches for related data of a target context selected from a plurality of target contexts displayed on the image in an address book and displays and stores the found related data. If the plurality of target contexts are selected from the displayed target contexts, the controller 110 may search for common data regarding the plurality of target contexts in the address book and display the found common data instead of or in addition to the target contexts. If one of the plurality of target contexts does not exist in the address book, such a target context is excluded from the target item.

If the "object" item is selected in the additional information input area according to an exemplary embodiment of the present invention, the controller 110 generates, displays, and stores a sentence while displaying related data of a context selected from contexts displayed on the image. If an emoticon expressing emotion is selected, the controller 10 displays related data of the selected emoticon and generates the sentence.

If input of the per-item classification information (a place, a time, a target, and an object) is completed according to an exemplary embodiment of the present invention, the controller 110 combines data displayed and stored based on the per-item classification information to display and store additional information about the image as a single sentence or phrase.

According to an exemplary embodiment of the present invention, the controller 110 may set a link to related data of the context and display the set link such that connection can be made to a detailed information providing address (URL)/location regarding the related data of the context.

The controller 110 can upload the additional information, together with the image, to the web server according to an exemplary embodiment of the present invention.

The controller 110 can store the related data of the context in the memory 130 on an item basis according to an exemplary embodiment of the present invention, in which the related data of the context may be stored in the XML or HTML format.

The controller 110 may can data displayed as the additional information through the image or separately from the image in the memory 130 according to an embodiment of the present invention. The controller 110 may store the additional information as a single image file (such as, for example, JPG) through the image, the image including the additional information in another file format other than the image file, or the additional information in the XML or HTML format separately from the image.

With continued reference to FIG 1, the camera module 140 captures an image, and may preferably include a camera sensor for converting an optical signal of the captured image into an electrical signal, and a signal processor for converting an analog image signal of the image captured by the camera sensor into digital data. Herein, it is assumed that the camera sensor is a Charge Coupled Device (CCD) sensor or a Complementary Metal Oxide Semiconductor (CMOS) sensor, and the signal processor may be implemented as a Digital Signal Processor (DSP). In addition, the camera sensor and the signal processor may be implemented as one piece or separately.

An image processor 150 performs Image Signal Processing (ISP) to display an image signal output from the camera module 140 on the display unit 160. The ISP executes functions such as gamma correction, interpolation, space conversion, image effect, image scale, Auto White Balance (AWB), Auto Exposure (AE) and Auto Focus (AF). Thus, the image processor 150 processes the image signal output from the camera module 140 in the unit of a frame, and outputs frame image data adaptively to the features and size of the display unit 160. The image processor 150 preferably includes an image codec, and compresses the frame image data displayed on the display unit 160 in a preset manner or restores the compressed frame image data to the original frame image data. Herein, the image codec may be, for example, a Joint Picture Experts Group (JPEG) codec, Moving Picture Experts Group 4 (MPEG4) codec, or Wavelet codec. It is assumed that the image processor 150 has an on screen display (OSD) function. The image processor 150 may output OSD data according to the displayed picture size under the control of the controller 110.

The display unit 160 displays an image signal output from the image processor 150 on the screen and displays user data output from the controller 110. Herein, the display unit 160 may be a Liquid Crystal Display (LCD), and in this case, the display unit 160 may include an LCD controller, a memory capable of storing image data, an LCD element, and so on. When the LCD is implemented with a touch screen, it may serve as an input unit. In this case, on the display unit 160, keys such as the key input unit 127 may be displayed.

Upon selection of the input of additional information about an image, the display unit 160 may display contexts on the image and displays the additional information input area including the per-item classification information, together with the image.

Upon completion of generation of the additional information, the display unit 160 displays the additional information including data indicating link connection, together with the image according to an exemplary embodiment of the present invention.

The GPS receiver 170 receives current location information of the portable terminal and outputs the current location information to the controller 110.

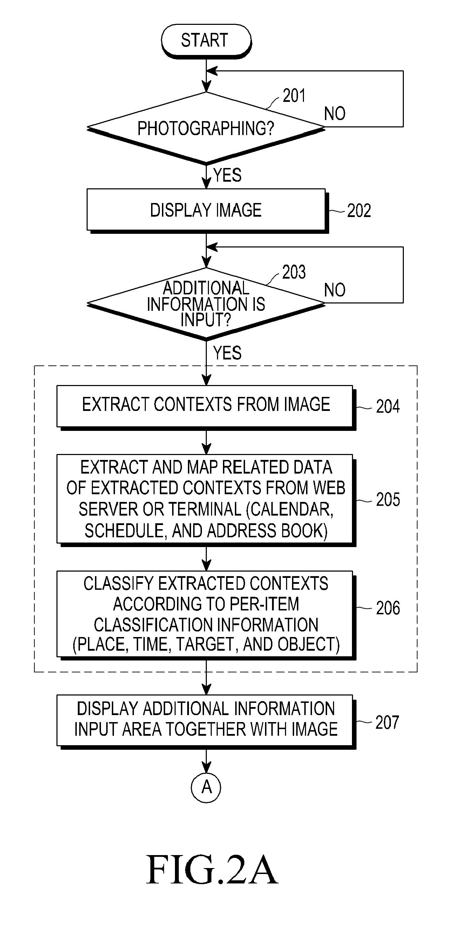

A process of inputting additional information about an image in the portable terminal will now be described in detail with reference to FIGs. 2A through 2C.

FIGs. 2A through 2C are flowcharts illustrating an operational process of inputting additional information about an image in the portable terminal according to an exemplary embodiment of the present invention.

The current exemplary embodiment of the present invention will now be described in detail with reference to FIGs. 1 and 2A through 2C.

Referring now to FIG. 2A, once photographing is performed using the camera module 140 of the portable terminal, the controller 110 senses this operation in step 201 and displays a captured image in step 202.

If the input of additional information about the image is selected during display of the image in step 202, the controller 110 senses the selection in step 203 and extracts contexts from the image in step 204.

The contexts are configuration information of the image, such that configuration images included in the image, e.g., a church image, a bridge image, and images of a person or people can be extracted using pixel information of the image and configuration information indicating that the extracted configuration images are, for example, a church, a bridge, and a person may be extracted.

Once the contexts regarding the image are extracted in step 204, the controller 110 extracts related data of the contexts from an address book, a calendar, and a schedule of the web server or the portable terminal and maps the related data to the contexts in step 205.

If the controller 110 transmits a current location of the portable terminal received through the GPS receiver 170 and a corresponding context to the web server in step 205, the web server may extract the corresponding context based on the current location of the portable terminal and map the context to the related data.

The controller 110 classifies the extracted contexts according to the per-item classification information (a place, a time, a target, and an object) in step 206.

With continued reference to FIG. 2A, upon completion of steps 204 through 206 after selection of input of additional information about the image in step 230, the controller 110 displays the additional information input area, together with the image, on the display unit 160 in step 207.

In step 207, the per-item classification information, i.e., the place (where) item, the time (when) item, the target (who) item, and the object (what) item are classified and displayed in the additional information input area.

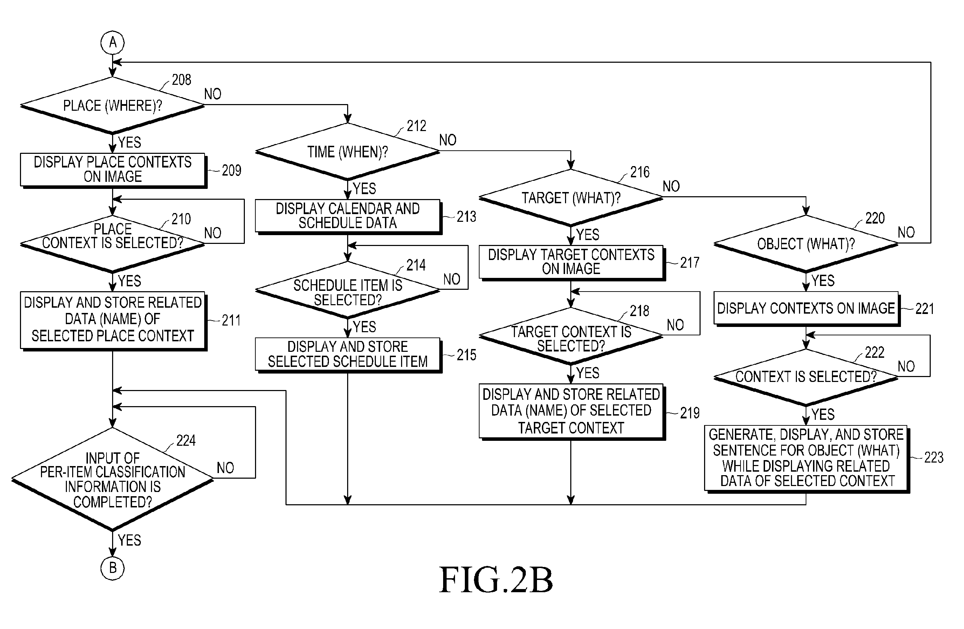

Referring now to FIG. 2B, if the place (where) item is selected in the additional information input area, the controller 110 senses the selection in step 208 and displays place contexts on the image in step 209.

If in step 209, a place context is selected from the displayed place contexts, the controller 110 senses the selection in step 210, and displays related data of the selected place context and stores the related data of the place context in the XML or HTML format in a database of the memory 130 in step 211. The related data of the place context may be acquired through a mapping relationship with related data provided by the web server.

In step 211, the controller 110 sets and displays a link allowing connection to a detailed information providing address/location to provide detailed information about the related data of the place context. The detailed information providing address may be an URL address.

If the time (when) item is selected in the additional information input area, the controller 110 senses the selection in step 212 and displays a calendar including the current date and schedule data corresponding to the current date in a calendar and a schedule of the portable terminal in step 213.

If a schedule item is selected from the schedule data displayed in step 213, the controller 110 senses this selection in step 214, and displays the schedule item and stores the schedule item in the XML or HTML format in the database of the memory 130 in step 215.

The controller 110 also sets and displays a link allowing a connection to the detailed information providing address/location to provide detailed information about the schedule in step 215. The detailed information providing address/location may be the calendar and schedule of the portable terminal.

If the target (who) item is selected in the additional information input area, the controller 110 senses the selection in step 216 and displays target contexts on the image in step 217.

If a target context is selected from the target contexts displayed in step 217, the controller 110 then senses the selection in step 218, and displays related data of the target context mapped in the address book and stores the related data of the target context in the XML or HTML format in the database of the memory 130 in step 219.

If a plurality of target contexts are selected in step 217, the controller 110 senses the selection, extracts common data for related data of the plurality of target contexts mapped in the address book, and displays the extracted common data.

If one of the plurality of target contexts does not exist in the address book, the controller 110 excludes such a target context from the target item.

The controller 110 sets and displays a link allowing connection to the detailed information providing address/location to provide detailed information about related data of the target context in step 219. In this particular case, the detailed information providing address/location may be an address book of the portable terminal or a representative SNS site.

If the object (what) item is selected in the additional information input area, the controller 110 senses the selection in step 220 and displays contexts extracted from the image in step 221.

If a context, e.g., a smile in an enlarged image of a face, or a person or a target object, is selected from the displayed contexts in step 221, the controller 110 senses the selection in step 222 and generates and displays a single sentence or phrase for the object (what) while displaying related data of the selected context mapped in the portable terminal in step 223.

If an emoticon expressing emotion is selected, the controller 110 may generate the sentence or phrase while displaying data corresponding to the selected emoticon in step 223.

In step 223, the controller 110 may generate and display a single sentence or phrase for the object (what) while repeating display of related data of the context selected from the image by a user.

After the single sentence for the object (what) is generated and displayed in step 223, the user may edit the sentence or phrase through manual input and store the edited sentence in the XML or HTML format in the database of the memory 130.

In step 223, the controller 110 sets and displays a link allowing connection to detailed information providing address/location to provide detailed information about the related data of the place context. In this case, the detailed information providing address/location may be the web server, the portable terminal (a calendar, a schedule, and an address book), and a representative SNS site.

Once input of the per-item classification information is completed at steps 208 through 223, the controller 110 senses the completion in step 224 and displays the additional information as a single sentence by combining related data displayed and stored in the per-item classification information in step 225.

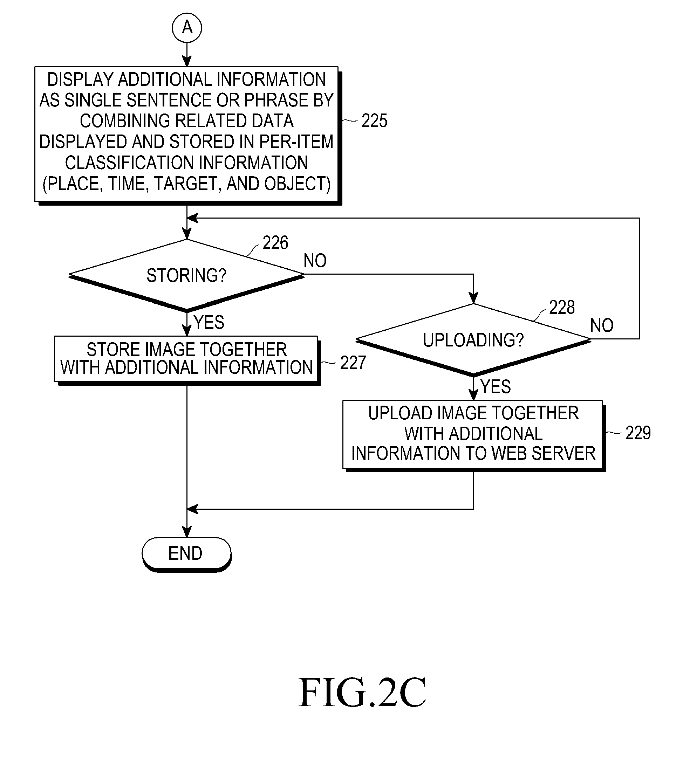

Referring now to FIG. 2C, when the controller 110 displays the additional information as a single sentence or phrase by combining related data displayed and stored in the per-item classification information through a sentence/phrase configuration program in step 225, the user may manually perform an edit function.

If a storing operation is selected, the controller 110 senses the selection in step 226 and stores the image together with the additional information in step 227.

In step 227, the controller 110 may store the additional information as a single image file (such as JPG) through the image, the image including the additional information in another file format other than the image file, or the additional information in the XML or HTML format separately from the image.

If an upload operation is selected, the controller 110 senses the selection in step 228 and uploads the image, together with the additional information to the web server in step 229.

In step 229, the controller 110 may upload the additional information as a single image file (such as JPG) through the image, the image including the additional information in another file format other than the image file, or the additional information in the XML or HTML format separately from the image.

For the image and the additional information uploaded to the web server, only the image or both the image and the additional information may be shared according to the user's setting, or there can be a default setting.

After connection the web server, steps 201 through 225 are performed, such that the image and the additional information can be uploaded in real time.

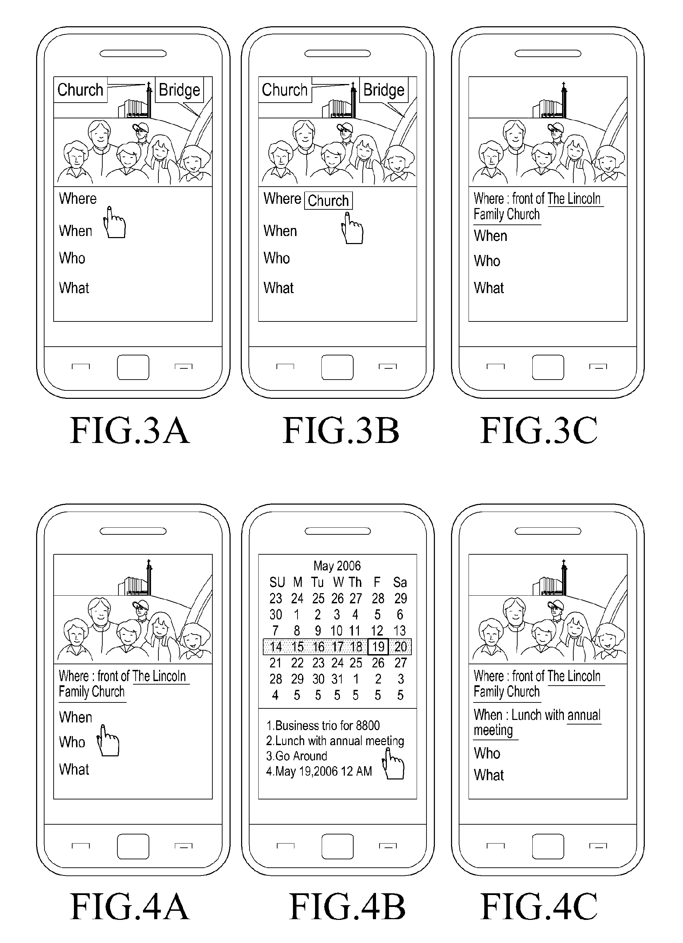

FIGs. 3 through 7 are diagrams for illustrating a process of inputting additional information about an image in the portable terminal according to an exemplary embodiment of the present invention.

FIG. 3 is a diagram for illustrating a process of inputting related data of a place context in the place (where) item of the per-item classification information in the additional information input area.

As shown in FIG. 3(a), upon selection of the place item "where" in the additional information input area, place contexts "church" and "bridge" are displayed on the image.

As shown in FIG. 3(b), if the place context "church" is selected from the displayed place contexts "church" and "bridge" by dragging, related data of the selected place context "church", "front of The Lincoln Family Church" is displayed as shown in FIG. 3(c).

In FIG. 3(c), it is indicated that the related data "The Lincoln Family Church" is linked. The related data displayed in FIG. 3(c) may also be edited by the user, such that a necessary word may be added to the related data or the related data may be modified.

FIG. 4 is a diagram for illustrating a process of inputting related data of a time context in the time (when) item of the per-item classification information in the additional information input area.

Upon selection of the time item "when" in the additional information input area as shown in FIG. 4(a), a calendar including a current date and schedule data corresponding to the current date are displayed as shown in FIG. 4(b).

If a schedule item "Lunch with annual meeting" is selected from the schedule data displayed in FIG. 4(b), the schedule item "Lunch with annual meeting" is displayed as shown in FIG. 4(c). FIG. 4(c) indicates that related data "annual meeting" is linked. The related data displayed in FIG 4(c) may also be edited by the user, such that a necessary word may be added to the related data or the related data may be modified.

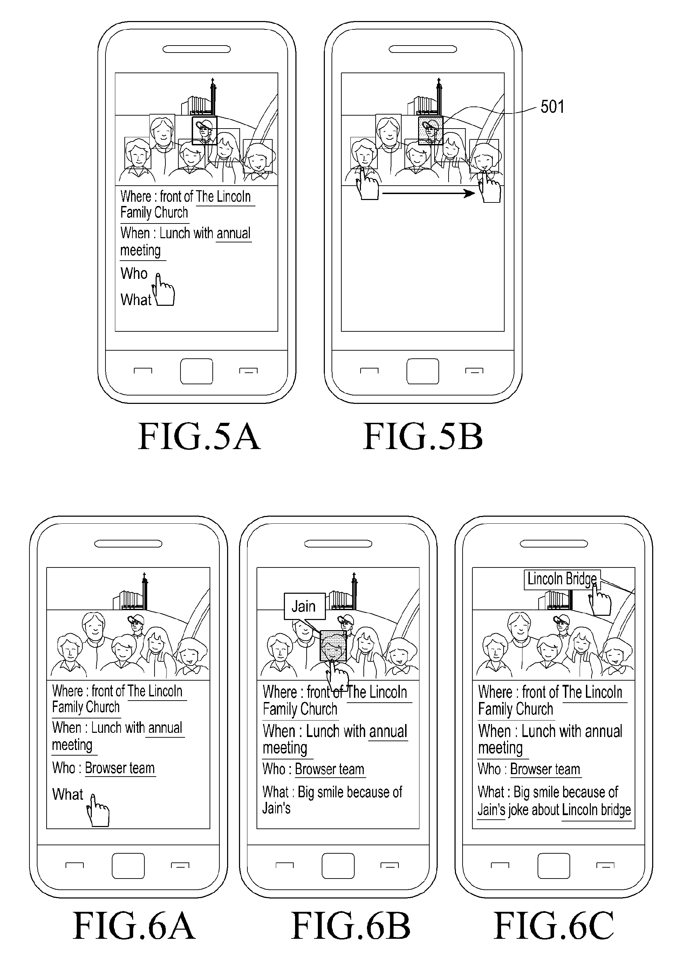

FIG. 5 is a diagram illustrating a process of inputting related data of a target context in the target (who) item of the per-item classification information in the additional information input area.

Upon selection of the target item "who" in the additional information input area as shown in FIG. 5(a), target contexts are displayed on the image.

If a plurality of target contexts are selected by dragging as shown in FIG. 5(b), common data "Browser team" in the plurality of target contexts is extracted from a mapped address book and displayed. In FIG. 5(b), a target context 510 which does not exist in the address book is excluded from the target item. In FIG. 5(b), it is indicated that the common data "Browser team" is linked. The related data displayed in FIG. 5(b) may also be edited by the user, such that a necessary word may be added to the related data or the related data may be modified.

FIG. 6 is a diagram illustrating a process of inputting related data of an object context in the object (what) item of the per-item classification information in the additional information input area.

Upon selection of the object item "what" in the additional information input area as shown in FIG. 6(a), all the extracted contexts are displayed on the image.

As shown in FIGs. 6(a) and 6(b), if contexts "Jain" and "Bridge" are selected from all the contexts displayed on the image, a single sentence or phrase may be generated and displayed while displaying related data "Big smile because of Jain's" and "Lincoln bridge" of the selected contexts "Jain" and "Bridge".

After the sentence or phrase is generated and displayed, it may be edited by the user such that a necessary word may be added to the sentence/phrase or the sentence/phrase may be modified. In FIG. 6(c), it is indicated that the related data "Jain" and "Lincoln bridge" are linked in the sentence.

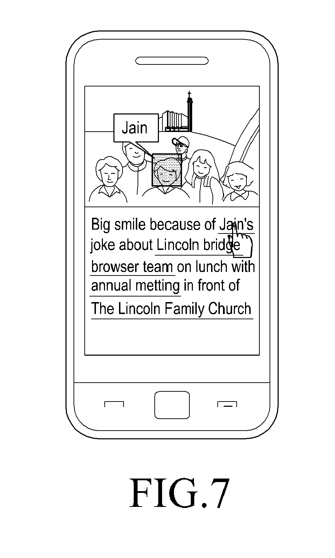

FIG. 7 shows the image and the additional information about the image, which is displayed as a single sentence by combining related data input according to the per-item classification information through FIGs. 3 through 6. The displayed additional information may be edited by the user, and in FIG. 7, it is indicated that related data is linked.

As can be anticipated from the foregoing description, with an apparatus and method for managing image data according to the presently claimed invention, an advantage is that it is not necessary to input additional information about an image separately. In addition, data included in the additional information has a link allowing connection to a detailed information providing address/location, such that detailed information about the data can be easily provided through the connected link.

The above-described methods according to the present invention can be realized in hardware or as software or computer code that can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor (controller) or the programmable hardware include memory components, e.g., RAM, ROM, Flash, etc. that may store or receive software or computer code that when accessed and executed by the computer, processor or hardware implement the processing methods described herein.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y

While a detailed exemplary embodiment such as a portable terminal has been described in the present invention, various changes may be made without departing from the scope of the presently claimed invention. Accordingly, the scope of the present invention should be defined by the claims and equivalents thereof, rather than the described embodiment.

## Claims

1. An apparatus for managing image data, the apparatus comprising:
a camera module (140) for capturing an image;
a display unit (160) for displaying the image and additional information about the image; and
a controller (110) for extracting contexts from the image, and for controlling: display of related data of the contexts as classified per-item , storage of the displayed related data of contexts, combining the displayed and stored related of contexts, and displaying and storing the combined related data of contexts as the additional information about the image.

2. The apparatus of claim 1, further comprising a memory (130) for storing the related data of the contexts per item and for storing data displayed as the additional information through the image or separately from the image.

3. The apparatus of claim 1 or claim 2, **characterized in that** the related data of the contexts is stored in an Extensible Markup Language (XML) or Hypertext Markup Language (HTML) format, and
the additional information is stored as a single image file through the image, the image comprising the additional information is stored in another file format other than the image file, or the additional information being stored in the XML or HTML format separately from the image file.

4. The apparatus of any preceding claim, **characterized in that** the controller (110) extracts and maps the related data of the contexts from a web server or a portable terminal.

5. The apparatus of any preceding claim, **characterized in that** if input of the additional information about the captured image is selected, the controller (110) controls the display unit to display an additional information input area comprising the per-item classification information, together with the image, and controls the display and storage of related data of a context selected from the image according to the per-item classification information.

6. The apparatus of claim 5, **characterized in that** the controller (110) controls: display and storage of related data of a place context selected from place contexts displayed on the image when a place item is selected in the additional information input area;
display and storage of a schedule item selected from schedule data corresponding to a current date when a time item is selected in the additional information input area;
display and storage of related data of a target context selected from target contexts displayed on the image when a target item is selected in the additional information input area;
generating, display and storage of a phrase or sentence while displaying related data of a context selected from contexts displayed on the image when an object item is selected in the additional information input area and
display and storage of the additional information about the image as a single sentence by combining data displayed and stored according to the per-item classification information when input of the per-item classification information is completed.

7. A method for managing image data, the method comprising the steps of:
extracting contexts from the image and classifying the contexts per item upon selection of an input of additional information about an image; and
displaying and storing related data of the contexts classified per item and displaying and storing the additional information about the image by combining the related data of the contexts classified per item.

8. The method of claim 7, further comprising extracting and mapping the related data of the contexts from a web server or a portable terminal.

9. The method of claim 7 or claim 8, **characterized in that** the displaying and storing of the additional information comprises:
displaying an additional information input area on a display (160) comprising the per-item classification information, together with the image,
displaying and storing related data of a place context selected from place contexts displayed on the image upon selection of a place item in the additional information input area;
displaying and storing a schedule item selected from schedule data corresponding to a current date upon selection of a time item in the additional information input area;
displaying and storing related data of a target context selected from target contexts displayed on the image upon selection of a target item in the additional information input area;
generating, displaying, and storing a sentence while displaying related data of a context selected from contexts displayed on the image upon selection of an object item in the additional information input area; and
displaying and storing the additional information about the image as a single sentence by combining data displayed and stored according to the per-item classification information upon completion of input of the per-item classification information.

10. The method of claim 9, **characterized in that** the displaying and storing of the schedule data comprises searching for a calendar comprising a current date and schedule items corresponding to the current date in a calendar and a schedule of the portable terminal and displaying the found calendar and schedule items, upon selection of a time item in the additional information input area.

11. The method of claim 9 or claim 10, **characterized in that** the displaying and storing the related data of the target context comprises:
displaying target contexts on the image upon selection of a target item in the additional information input area;
searching for the selected target context in an address book of the portable terminal and displaying and storing related data of the selected target context upon selection of a target context from the displayed target contexts.

12. The method of claim 11, further comprising searching for common data for the plurality of target contexts in the address book and displaying the found common data upon selection of a plurality of target contexts from the displayed target contexts, and
excluding the target contexts which does not exist in the address book from the target item when one of the plurality of target contexts does not exist in the address book.

13. The method of any one of claims 9 to 12, **characterized in that** the generating of the sentence while displaying of the related data of the contexts comprises:
generating the sentence while displaying related data of the selected emoticon upon selection of an emoticon expressing emotion.

14. The method of any one of claims 7 to 13, **characterized in that** the related data of the contexts are stored per item, and data displayed as the additional information is stored through the image or separately from the image.

15. The method of claim 14, **characterized in that** the related data of the contexts is stored in an Extensible Markup Language (XML) or Hypertext Markup Language (HTML) format, and
the additional information is stored as a single image file through the image, the image comprising the additional information is stored in another file format other than the image file, or the additional information is stored in the XML or HTML format separately from the image.
